(19) **Europäisches Patentamt European Patent Office Office européen des brevets**

(11) **EP 3 083 323 B1**

(12) **FASCICULE DE BREVET EUROPEEN**

(45) Date de publication et mention de la délivrance du brevet:
**05.01.2022 Bulletin 2022/01**

(21) Numéro de dépôt: **14809917.9**

(22) Date de dépôt: **04.11.2014**

(51) Int Cl.:
*B60W 20/00* (2016.01)   *B60W 10/06* (2006.01)
*B60W 10/08* (2006.01)   *B60W 10/26* (2006.01)
*H02J 7/14* (2006.01)

(86) Numéro de dépôt international:
**PCT/FR2014/052796**

(87) Numéro de publication internationale:
**WO 2015/092173 (25.06.2015 Gazette 2015/25)**

(54) **PROCEDE ET DISPOSITIF DE GESTION DE L'ENERGIE D'UN VEHICULE HYBRIDE**

VERFAHREN UND VORRICHTUNG ZUR VERWALTUNG DER ENERGIE EINES HYBRIDFAHRZEUGS

METHOD AND DEVICE FOR MANAGING THE ENERGY OF A HYBRID VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2013 FR 1362679**

(43) Date de publication de la demande:
**26.10.2016 Bulletin 2016/43**

(73) Titulaire: **Renault s.a.s.**
**92100 Boulogne-Billancourt (FR)**

(72) Inventeurs:
• **KETFI-CHERIF, Ahmed**
  **F-78990 Elancourt (FR)**
• **NAIR, Karima**
  **F-78000 Versailles (FR)**
• **DEBERT, Maxime**
  **F-78000 Versailles (FR)**

(56) Documents cités:
**DE-A1-102007 060 691    DE-A1-102010 009 565**
**DE-A1-102011 087 969    US-A1- 2004 178 756**
**US-A1- 2011 025 127**

**Description**

La présente invention concerne la gestion de l'énergie d'un véhicule hybride.

Plus précisément, elle a pour objet un procédé et un dispositif de de gestion de l'énergie d'un véhicule hybride comportant un moteur thermique et une ou plusieurs machines électriques de traction.

Un groupe motopropulseur de véhicule à propulsion, ou à traction, hybride, comprend un moteur thermique et une ou plusieurs machines électriques, alimentées par au moins une batterie de traction embarquée à bord du véhicule. L'alimentation de la, ou des, machine(s) électrique(s) est assurée par une ou plusieurs batteries à haute tension, tandis que l'architecture électrique générale du véhicule (démarreur, équipements, climatisation, etc.) est alimentée à partir d'une batterie de bord à basse tension.

Le véhicule bénéficie de plusieurs organes pour assurer son déplacement. Son dispositif de gestion énergétique dispose d'un degré de liberté pour réaliser le couple demandé par le conducteur, à savoir la répartition de la puissance entre le moteur thermique et la machine électrique. L'optimisation de la gestion des flux énergétiques peut répondre à différents objectifs, comme par exemple les performances dynamiques du véhicule, la minimisation de la consommation de carburant, ou encore la limitation des émissions de dioxyde de carbone ou des particules polluantes. Le principe appliqué pour choisir le meilleur point de fonctionnement peut consister à minimiser un critère de consommation de carburant en grammes par unité de temps *(g/h)*, égal à la somme de la consommation du moteur *« Conso Mth (g/h) »* et de la consommation électrique en pondérant l'énergie d'origine électrique $P_{batterie}$ *(W)* par un facteur de pondération ou d'équivalence K dans une équation du type : *Critère (g/h) = Conso Mth (g/h) + K. $P_{batterie}$ (W)*. Le facteur d'équivalence représente le coût de l'énergie électrique stockée dans la batterie. Il peut être piloté de diverses manières, notamment de manière discrète en fonction de l'état d'énergie instantanée de la batterie (il est d'autant plus élevé que la charge de la batterie est faible), et en fonction des conditions de roulage du véhicule, par exemple conformément à l'enseignement de la publication FR 2 988 674. Un autre exemple est publié dans DE102011087969.

En appelant $T_{driv}$ le couple demandé par le conducteur, $T_{SG}$ le couple électrique et $T_{CE}$ le couple thermique, la répartition du couple entre les deux sources motrices peut s'écrire $T_{driv} = T_{SG} + T_{CE}$. Exprimé en carburant, le critère de consommation énergétique C sur un point de fonctionnement du GMP, s'écrit comme la somme de la consommation de carburant $Q_{fuel}$ (dépendant du couple $T_{CE}$ et du régime $\omega_{CE}$) et de la consommation électrique traduite en équivalent de carburant consommé : $C = Q_{fuel}(T_{CE}, \omega_{CE}) + K.P_{bat}$. Le bilan électrique de la batterie $P_{bat}$ est alors la somme de la puissance électrique motrice $\omega_{SG}. T_{SG}$, et des pertes $P_{loss}$ électriques issues de la machine électrique et de l'onduleur délivrant à celle-ci une tension alternative à partir de la batterie : $P_{bat} = \omega_{SG}.T_{SG} + P_{loss}(\omega_{SG}, T_{SG})$.

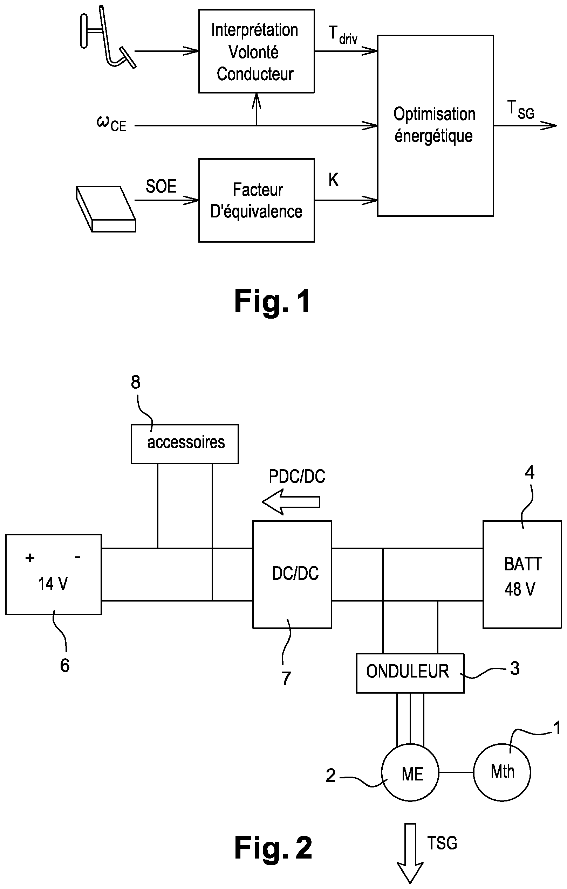

Comme résumé sur la figure 1, le calcul effectué sur la base du couple demandé par le conducteur, $T_{drive}$ du régime thermique $\omega_{CE}$, et du facteur d'équivalence $K$ de la batterie haute tension, permet de déterminer à chaque instant la valeur du couple électrique $T_{SG}$ optimale. Toutefois, le régime de la machine électrique et celui du moteur thermique étant proportionnels sur chaque rapport de transmission, le seul degré de liberté permettant l'optimisation énergétique du GMP, est le couple électrique $T_{SG}$.

La présente invention vise à améliorer l'optimisation énergétique globale d'un GMP hybride, en introduisant dans le calcul de la consommation optimale, un degré de liberté supplémentaire.

Dans ce but, elle prévoit de prendre en compte l'énergie contenue dans la batterie basse tension, dans la gestion énergétique du véhicule.

A cet effet, elle prévoit d'utiliser un transformateur réversible permettant de profiter du stock d'énergie disponible dans la batterie de bord du véhicule, de manière à ne pas soutirer d'énergie à la batterie de traction, lorsque celle-ci a un niveau de charge trop faible.

La méthode proposée repose sur le choix d'un point de fonctionnement, en réponse à la demande de couple du conducteur, impliquant le minimum de consommation de carburant dans le moteur thermique. Ce point de fonctionnement est déterminé en imposant à la machine électrique la fourniture un couple minimisant un critère de consommation de carburant cumulée au travers de la consommation du moteur thermique, de la puissance consommée dans la batterie de traction, et de la puissance consommée dans la batterie de bord.

L'énergie stockée dans la batterie de bord du véhicule, généralement non prise en compte dans les flux énergétiques d'un véhicule hybride, est mise à profit. Les mesures proposées exploitent le potentiel de la batterie de bord du véhicule dans la gestion des flux énergétiques, notamment pour minimiser le critère de consommation énergétique, et optimiser la gestion de la puissance consommée par les accessoires du véhicule. En tenant compte de ce réservoir d'énergie et en optimisant son exploitation, il est ainsi possible de réduire la consommation d'énergie globale du véhicule. Les bénéfices de cette stratégie sont d'autant plus importants que la batterie de traction dispose d'une faible capacité de stockage d'énergie.

D'autres caractéristiques et avantages de la présente invention ressortiront clairement de la description suivante d'un mode de réalisation non limitatif de celle-ci, en se reportant aux dessins annexés, sur lesquels :

- la figure 1 est un algorithme d'optimisation implanté dans calculateur de GMP Hybride,

- la figure 2 est un schéma d'architecture électrique de véhicule hybride,
- la figure 3 est un nouvel algorithme d'optimisation incluant un degré de liberté supplémentaire,
- la figure 4 montre les flux électriques en traction avec une batterie 14V chargée,
- la figure 5 montre les flux électriques en recharge avec une batterie 14V chargée,
- la figure 6 montre les flux électriques en traction avec deux batteries chargées,
- la figure 7 montre les flux électriques en traction avec la batterie 14V très faiblement chargée, et
- la figure 8 montre les flux électriques en recharge avec la batterie 14V très faiblement chargée.

La figure 1 présente de façon synthétique, le principe de base de l'optimisation énergétique sur un véhicule hybride, qui conduit à imposer à la machine électrique une consigne de couple $T_{SG}$ permettant d'optimiser le critère de consommation de carburant exprimé en équivalents grammes de carburant (g) par heure (h) dans l'équation : *Critère (g/h) = Conso Mth (g/h) + K. Pbatterie (W)*. Le véhicule concerné comporte un moteur thermique 1. Il peut comporter une ou plusieurs machines électriques de traction 2, au moins une batterie de traction haute tension 4 et une batterie de bord 6 à basse tension pour les accessoires 8 du véhicule. Un onduleur de courant 3 transforme les courants continus fournis par la batterie de traction 2 et par la batterie de bord 6, en courants alternatifs pour la machine électrique 2. Un transformateur de courant 7 convertit le courant à haute tension de la batterie de traction 4, en courant basse tension de la batterie de bord 6. Dans ce calcul d'optimisation, les variables d'entrée sont la demande de couple moteur $T_{drive}$, interprétée à partir de l'action du conducteur sur la pédale d'accélérateur, le régime du moteur thermique $\omega_{CE}$ et le facteur d'équivalence K, tenant compte de l'état de charge de la batterie *(SOC)*. Le couple électrique $T_{SG}$, lié au facteur d'équivalence K, est le seul degré de liberté pour déterminer le point de fonctionnement du GMP.

La nouvelle technique d'optimisation exploite un degré de liberté supplémentaire dans ce type de calcul. La répartition énergétique s'effectue toujours entre puissance électrique et puissance thermique, mais l'invention prend en compte le tampon d'énergie disponible dans la batterie du réseau basse tension, pour calculer le couple électrique.

Sur la figure 2, on a schématiquement représenté le dispositif de gestion de l'énergie d'un véhicule hybride concerné. Ce dispositif comporte un moteur thermique 1, une ou plusieurs machines électriques de traction 2, au moins une batterie de traction haute tension 4, une batterie de bord 6 à basse tension pour les accessoires 8 du véhicule. Le moteur thermique 1 du véhicule est relié mécaniquement par la transmission à la machine électrique 2 qui délivre le couple de traction électrique $T_{SG}$. L'onduleur 3 assure la transformation des courants continus fournis par la batterie de traction 4 et par la batterie de bord 6, en courants alternatifs pour la machine électrique 2. Conformément à l'invention, le transformateur 7 a un fonctionnement réversible, qui permet de profiter du stock d'énergie disponible dans la batterie basse tension 6 pour ne pas soutirer d'énergie à la batterie haute tension 4, lorsque celle-ci a un niveau de charge (SOC) trop faible. Désormais, le point de fonctionnement du véhicule hybride impliquant le minimum de consommation de carburant dans le moteur thermique, est déterminé en imposant à la machine électrique 2 un couple $T_{SG}$ qui minimise un critère de consommation de carburant cumulée au travers de la consommation du moteur thermique *ConsoMth(g/h)*, de la puissance consommée dans la batterie de traction $P_{bat}^{HT}$, et aussi de la puissance consommée dans la batterie de bord $P_{bat}^{BT}$. Sur chaque point de fonctionnement du GMP, on détermine les valeurs du couple électrique $T_{SG}$ et de la puissance propre du transformateur $P_{DC/DC}$ permettant de minimiser le critère de consommation de carburant cumulée *(ConsoMth (g/h))*.

Cette nouvelle régulation est régie par les équations suivantes (dans lesquelles on compte par convention une puissance négative en mode recharge) :

$$P_{bat}^{HT} = \omega_{SG} \cdot T_{SG} + P_{loss} + P_{DC/DC}$$

$$P_{bat}^{BT} = -P_{DC/DC} + P_{acc}$$

où $P^{HT}_{bat}$ est la puissance consommée dans la batterie à haute tension 4, et $P^{BT}_{bat}$ est et celle qui est consommée dans la batterie basse tension 6. La puissance consommée dans le transformateur 7 est $P_{DC/DC}$. La puissance consommée dans la batterie haute tension $P_{bat}^{HT}$ est la somme de l'énergie électrique de traction fournie aux roues du véhicule $\omega_{SG} \cdot T_{SG}$, des pertes électriques $P_{loss}$ de la machine électrique 2 et de l'onduleur 3, et de la puissance $P_{DC/DC}$ consommée dans le convertisseur 7. La puissance $P_{bat}^{BT}$ consommée dans la batterie basse tension 6 est égale à somme de la puissance $P_{acc}$ consommée dans les accessoires 8 et de la puissance $-P_{DC/DC}$ fournie par le convertisseur 7.

Si la batterie haute tension 4 est une batterie de 48V (48 volts) et la batterie basse tension 6 de 14V (14 volts), le critère de consommation permettant de trouver le point de fonctionnement avec le minimum de consommation de carburant est dans cet exemple :

$$\text{Critère ( g/h)= Conso Mth ( g/h) + K. Pbatterie\_48V ( W) + K'. Pbatterie\_14V (W)}$$

Dans cette équation, la puissance consommée dans la batterie de traction $P_{bat}^{HT}$ (Pbatterie_ 48V) et la puissance consommée dans la batterie de bord $P_{bat}^{BT}$ (Pbatterie_14V) sont modulées dans le critère de consommation cumulée (*ConsoMth(g/h)*), par des facteurs d'équivalence *K, K'* tenant compte de leurs niveaux de charge respectifs. La puissance de la batterie basse tension est modulée par son propre facteur d'équivalence *K'*. On obtient ainsi pour chaque point de fonctionnement du GMP un couple de valeurs ($T_{SG}$, $P_{dc/dc}$), qui permet de minimiser la consommation de carburant. Les degrés de liberté du nouveau calcul sont désormais le couple électrique, et la puissance propre du transformateur $P_{dc/dc}$, qui sont issus de l'état des deux facteurs d'équivalence *K* et *K'*.

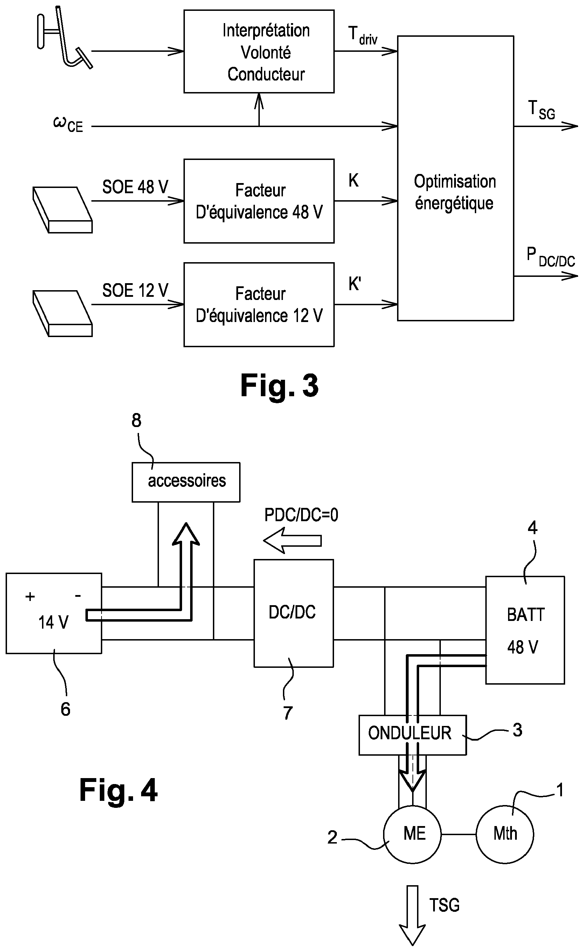

Le nouvel algorithme de calcul du minimum de consommation, est schématisé sur la figure 3. Aux trois entrées de calcul dans le bloc de la figure 1, s'ajoute le facteur d'équivalence *K'* de la batterie 14V, qui dépend du niveau de charge (SOE) de celle-ci.

Par ailleurs, au lieu de recharger uniquement la batterie 48V par le moteur thermique (en mode générateur), comme c'est le cas actuellement, l'invention propose de répartir la charge entre les deux batteries. La charge électrique fournie par la machine électrique 2 fonctionnant en générateur est répartie entre la batterie de traction 4 et la batterie de bord 6. Dès lors que la batterie 14V est rechargée régulièrement, le transfert d'énergie de la batterie de 48V sur celle-ci pour alimenter les accessoires, qui s'accompagnait d'une perte de rendement, peut être évité. Pour cela, le pilotage porte désormais, non seulement sur le couple électrique $T_{SG}$, mais aussi sur la puissance $P_{dc/dc}$ du transformateur 7.

Si par exemple, la batterie 14V est fortement chargée, son facteur d'équivalence *K'* est faible. La batterie 48V déchargée. Son propre facteur d'équivalence *K* est élevé (cf. figure 4). En traction, le nouveau critère de minimisation tend à faire augmenter la part de la basse tension au détriment de celle de la batterie haute tension dans l'apport d'énergie électrique aux roues. Comme la machine électrique doit être alimentée, l'ajustement s'effectue sur la puissance de batterie transférée vers la basse tension $P_{dc/dc}$. Celle-ci baisse, de sorte que la part de la batterie 14V dans l'alimentation des accessoires augmente, tandis celle de la batterie de 48V diminue. Conformément à la figure 4, la batterie 48V peut alors alimenter uniquement la machine électrique 2, tandis que la batterie 14V est seule à alimenter les accessoires 8.

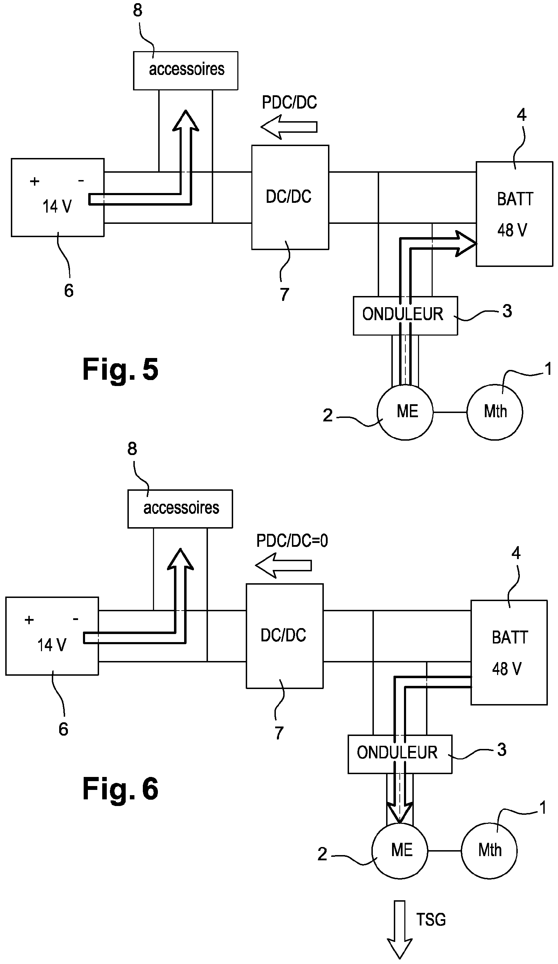

En mode de recharge (cf. figure 5), la consommation du moteur thermique est nulle, de sorte que la minimisation du critère énergétique ne dépend que de la répartition de l'énergie électrique à distribuer, entre la batterie 14V et la batterie 48V. Comme le facteur d'équivalence K de la batterie de traction (48V) est élevé, la fonction minimise $P_{batterie\_48V}$. Comme le facteur d'équivalence K' de la batterie de bord est faible, elle augmente $P_{batterie\_14V}$. $P_{dc/dc}$ tend vers 0, si bien que la recharge d'effectue uniquement du moteur électrique vers la batterie de traction, tandis que la batterie 14V alimente les accessoires 8 de façon autonome.

En mode traction, avec les deux batteries fortement chargées (cf. figure 6), les deux facteurs d'équivalence K et K' sont très faibles. La fonction de minimisation tend à imposer l'utilisation des deux batteries, et donc aussi à diminuer $P_{dc/dc}$ puisque *K'* est faible. La batterie 14V alimente les accessoires seule, et la batterie 48V dédie toute son énergie à la traction électrique. Dans cette situation, aucun carburant n'est consommé.

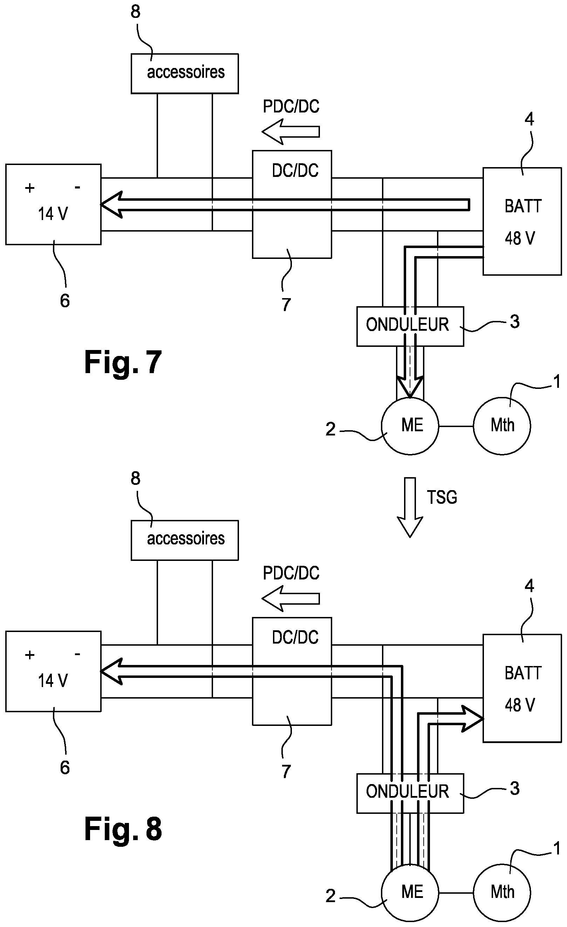

En mode traction avec la batterie 14V pratiquement déchargée et la batterie 48V chargée (cf. figure 7), la batterie 48V délivre de l'énergie à la fois à la batterie 14V et au moteur électrique.

En mode recharge avec la batterie 14V pratiquement déchargée et la batterie 48V chargée (cf. figure 8), la recharge de la batterie 14V est privilégiée. Si le couple de recharge est suffisamment fort, il est possible de recharger simultanément la batterie 48V.

**Revendications**

**1.** Procédé de gestion de l'énergie d'un véhicule hybride comportant un moteur thermique (1), une ou plusieurs machines électriques de traction (2), au moins une batterie de traction haute tension (4), une batterie de bord (6) à basse tension pour les accessoires (8) du véhicule, un onduleur de courant (3) apte à transformer les courants continus fournis par la batterie de traction (2) et par la batterie de bord (6) en courants alternatifs pour la machine électrique (2), et un transformateur de courant (7) réversible permettant de convertir le courant haute tension de la batterie de traction (4) en courant basse tension de la batterie de bord (6), et de profiter du stock d'énergie disponible dans la batterie basse tension (6) pour ne pas soutirer d'énergie à la batterie haute tension (4) lorsque celle-ci a un niveau de charge (SOC) relativement faible, **caractérisé en ce que** le point de fonctionnement du véhicule impliquant le minimum de consommation de carburant dans le moteur thermique est déterminé en imposant à la machine électrique (2) un couple ($T_{SG}$) minimisant un critère de consommation de carburant cumulée au travers de la consommation du moteur thermique *(ConsoMth (g/h))*, de la puissance consommée dans la batterie de traction ($P_{bat}^{HT}$),

et de la puissance consommée dans la batterie de bord ($P_{bat}{}^{BT}$).

**2.** Procédé de gestion d'énergie selon la revendication 1, **caractérisé en ce que** la puissance consommée dans la batterie de traction ($P_{bat}{}^{HT}$) et la puissance consommée dans la batterie de bord ($P_{bat}{}^{BT}$) sont modulées par des facteurs d'équivalence *(K, K')* tenant compte de leurs niveaux de charge respectifs.

**3.** Procédé de gestion d'énergie selon la revendication 2, **caractérisé en ce que** la puissance consommée dans la batterie haute tension ($P_{bat}{}^{HT}$) est la somme de l'énergie électrique de traction fournie ($\omega_{SG}.T_{SG}$), des pertes électriques ($P_{loss}$) de la machine électrique (2) et de l'onduleur (3), et de la puissance ($P_{DC/DC}$) consommée dans le convertisseur (7).

**4.** Procédé de gestion d'énergie selon la revendication 2 ou 3, **caractérisé en ce que** la puissance ($P_{bat}{}^{BT}$) consommée dans la batterie basse tension (6) est égale à somme de la puissance ($P_{acc}$) consommée dans les accessoires (8) et de la puissance ($-P_{DC/DC}$) fournie par le convertisseur (7) .

**5.** Procédé de gestion d'énergie selon la revendication 2, 3 ou 4, **caractérisé en ce qu'**on détermine sur chaque point de fonctionnement du moteur, les valeurs du couple électrique ($T_{SG}$) et de la puissance propre ($P_{DC/DC}$) du transformateur (7), permettant de minimiser le critère de consommation de carburant cumulée (*ConsoMth (g/h)*).

**6.** Procédé de gestion de l'énergie selon l'une des revendications précédentes, **caractérisé en ce que** la charge électrique fournie par la machine électrique (2) fonctionnant en générateur est répartie entre la batterie de traction (4) et la batterie de bord (6).

**7.** Dispositif de gestion de l'énergie d'un véhicule hybride comportant un moteur thermique (1), une ou plusieurs machines électriques de traction (2), au moins une batterie de traction haute tension (4), une batterie de bord (6) à basse tension pour les accessoires (8) du véhicule, un onduleur de courant (3) apte à transformer les courants continus fournis par la batterie de traction (2) et par la batterie de bord (6) en courants alternatifs pour la machine électrique (2), **caractérisé en ce qu'**il comporte entre la batterie de traction (4) et la batterie de bord (6) un transformateur de courant réversible (7) dont la puissance propre ($P_{DC/DC}$) est déterminée sur chaque point de fonctionnement du moteur, ainsi que la valeur du couple de traction ($T_{SG}$) imposé à la machine électrique (2), de manière à minimiser, un critère de consommation de carburant (*ConsoMth(g/h)*) cumulant la consommation du moteur thermique (*ConsoMth(g/h)*), la puissance ($P_{bat}{}^{HT}$) consommée dans la batterie de traction (4), et la puissance ($P_{bat}{}^{BT}$) consommée dans la batterie de bord (6).

**8.** Dispositif de gestion selon la revendication 7, **caractérisé en ce que** la valeur du couple de traction ($T_{SG}$) et de la puissance ($P_{DC/DC}$) du transformateur sont issues de l'état de deux facteurs d'équivalence *(K, K')*, modulant respectivement la part de la puissance ($P_{bat}{}^{HT}$) consommée dans la batterie de traction (4), et de la puissance ($P_{bat}{}^{BT}$) consommée dans la batterie de bord (6).

**9.** Dispositif de gestion selon la revendication 8, **caractérisé en ce que** les facteurs d'équivalence *(K, K')* dépendent du niveau de charge respectif de la batterie de traction (4) et de la batterie de bord (6) du véhicule.

## Patentansprüche

**1.** Verfahren zur Verwaltung der Energie eines Hybridfahrzeugs, das einen Verbrennungsmotor (1), eine oder mehrere elektrische Traktionsmaschinen (2), mindestens eine Hochspannungs-Traktionsbatterie (4), eine Bordbatterie (6) auf Niederspannung für die Zubehörteile (8) des Fahrzeugs, einen Stromwechselrichter (3), der die von der Traktionsbatterie (2) und von der Bordbatterie (6) gelieferten Gleichströme in Wechselströme für die elektrische Maschine (2) umwandeln kann, und einen umschaltbaren Stromwandler (7) aufweist, der es ermöglicht, den Hochspannungsstrom der Traktionsbatterie (4) in Niederspannungsstrom der Bordbatterie (6) umzuwandeln, und vom in der Niederspannungsbatterie (6) verfügbaren Energievorrat zu profitieren, um keine Energie von der Hochspannungsbatterie (4) abzuziehen, wenn diese einen relativ niedrigen Ladepegel (SOC) hat, **dadurch gekennzeichnet, dass** der Betriebspunkt des Fahrzeugs, der das Minimum an Kraftstoffverbrauch im Verbrennungsmotor impliziert, bestimmt wird, indem der elektrischen Maschine (2) ein Drehmoment ($T_{SG}$) vorgegeben wird, das ein Kriterium kumulierten Kraftstoffverbrauchs mittels des Verbrauchs des Verbrennungsmotors (ConsoMth(g/h)), der in der Traktionsbatterie ($P_{bat}{}^{HT}$) verbrauchten Leistung und der in der Bordbatterie ($P_{bat}{}^{BT}$) verbrauchten Leistung minimiert.

**2.** Energieverwaltungsverfahren nach Anspruch 1, **dadurch gekennzeichnet, dass** die in der Traktionsbatterie ($P_{bat}^{HT}$) verbrauchte Leistung und die in der Bordbatterie ($P_{bat}^{BT}$) verbrauchte Leistung durch Äquivalenzfaktoren (K, K') moduliert werden, die ihre jeweiligen Ladepegel berücksichtigen.

**3.** Energieverwaltungsverfahren nach Anspruch 2, **dadurch gekennzeichnet, dass** die in der Hochspannungsbatterie ($P_{bat}^{HT}$) verbrauchte Leistung die Summe der gelieferten elektrischen Traktionsenergie ($\omega_{SG} \cdot T_{SG}$), der Verlustleistungen ($P_{loss}$) der elektrischen Maschine (2) und des Wechselrichters (3) und der im Wandler (7) verbrauchten Leistung ($P_{DC/DC}$) ist.

**4.** Energieverwaltungsverfahren nach Anspruch 2 oder 3, **dadurch gekennzeichnet, dass** die in der Niederspannungsbatterie (6) verbrauchte Leistung ($P_{bat}^{BT}$) gleich der Summe der in den Zubehörteilen (8) verbrauchten Leistung ($P_{acc}$) und der vom Wandler (7) gelieferten Leistung ($-P_{DC/DC}$) ist.

**5.** Energieverwaltungsverfahren nach Anspruch 2, 3 oder 4, **dadurch gekennzeichnet, dass** an jedem Betriebspunkt des Motors die Werte des elektrischen Drehmoments ($T_{SG}$) und der Eigenleistung ($P_{DC/DC}$) des Wandlers (7) bestimmt werden, was es ermöglicht, das Kriterium kumulierten Kraftstoffverbrauchs (ConsoMth(g/h)) zu minimieren.

**6.** Verwaltungsverfahren der Energie nach einem der vorhergehenden Ansprüche, **dadurch gekennzeichnet, dass** die von der als Generator arbeitenden elektrischen Maschine (2) gelieferte elektrische Ladung zwischen der Traktionsbatterie (4) und der Bordbatterie (6) verteilt wird.

**7.** Verwaltungsvorrichtung der Energie eines Hybridfahrzeugs, das einen Verbrennungsmotor (1), eine oder mehrere elektrische Traktionsmaschinen (2), mindestens eine Hochspannungs-Traktionsbatterie (4), eine Bordbatterie (6) auf Niederspannung für die Zubehörteile (8) des Fahrzeugs, einen Stromwechselrichter (3) aufweist, der die von der Traktionsbatterie und von der Bordbatterie (6) gelieferten Gleichströme in Wechselströme (2) für die elektrische Maschine (2) umwandeln kann, **dadurch gekennzeichnet, dass** sie zwischen der Traktionsbatterie (4) und der Bordbatterie (6) einen umschaltbaren Stromwandler (7) aufweist, dessen Eigenleistung ($P_{DC/DC}$) an jedem Betriebspunkt des Motors, sowie der Wert des der elektrischen Maschine (2) vorgegebenen Antriebsdrehmoments ($T_{SG}$) bestimmt wird, um ein Kraftstoffverbrauch-Kriterium (ConsoMth(g/h)) zu minimieren, das den Verbrauch des Verbrennungsmotors (ConsoMth(g/h)), die in der Traktionsbatterie (4) verbrauchte Leistung ($P_{bat}^{HT}$) und die in der Bordbatterie (6) verbrauchte Leistung ($P_{bat}^{BT}$) kumuliert.

**8.** Verwaltungsvorrichtung nach Anspruch 7, **dadurch gekennzeichnet, dass** der Wert des Antriebsdrehmoments ($T_{SG}$) und der Leistung ($P_{DC/DC}$) des Wandlers vom Zustand von zwei Äquivalenzfaktoren (K, K') stammen, die je den Anteil der in der Traktionsbatterie (4) verbrauchten Leistung ($P_{bat}^{HT}$) und der in der Bordbatterie (6) verbrauchten Leistung ($P_{bat}^{BT}$) modulieren.

**9.** Verwaltungsvorrichtung nach Anspruch 8, **dadurch gekennzeichnet, dass** die Äquivalenzfaktoren (K, K') vom Ladepegel der Traktionsbatterie (4) bzw. der Bordbatterie (6) des Fahrzeugs abhängen.

## Claims

**1.** Method for managing the energy of a hybrid vehicle comprising a combustion engine (1), one or more electric traction machines (2), at least one high-voltage traction battery (4), a low-voltage on-board battery (6) for the accessories (8) of the vehicle, a current inverter (3) able to convert the direct currents provided by the traction battery (2) and by the on-board battery (6) into alternating currents for the electric machine (2), and a reversible current transformer (7) making it possible to convert the high-voltage current of the traction battery (4) into low-voltage current of the on-board battery (6), and to use the stock of energy available in the low-voltage battery (6) so as not to draw energy from the high-voltage battery (4) when the latter has a relatively low level of charge (SOC), **characterized in that** the operating point of the vehicle involving the minimum fuel consumption in the combustion engine is determined by imposing on the electric machine (2) a torque ($T_{SG}$) that minimizes a criterion of cumulated fuel consumption through the consumption of the combustion engine (*ConsoMth(g/h)*), the power consumed in the traction battery ($P_{bat}^{HT}$), and the power consumed in the on-board battery ($P_{bat}^{BT}$).

**2.** Method for managing energy according to Claim 1, **characterized in that** the power consumed in the traction battery ($P_{bat}^{HT}$) and the power consumed in the on-board battery ($P_{bat}^{BT}$) are modulated by equivalence factors *(K, K')*, taking into account the respective levels of charge of said batteries.

3. Method for managing energy according to Claim 2, **characterized in that** the power consumed in the high-voltage battery ($P_{bat}{}^{HT}$) is the sum of the provided electrical traction energy ($\omega_{SG} \times T_{SG}$), of the electrical losses ($P_{loss}$) of the electric machine (2) and of the inverter (3), and of the power ($P_{DC/DC}$) consumed in the converter (7).

4. Method for managing energy according to Claim 2 or 3, **characterized in that** the power ($P_{bat}{}^{BT}$) consumed in the low-voltage battery (6) is equal to the sum of the power ($P_{acc}$) consumed in the accessories (8) and of the power ($-P_{DC/DC}$) provided by the converter (7) .

5. Method for managing energy according to Claim 2, 3 or 4, **characterized in that** the values of the electrical torque ($T_{SG}$) and of the power ($P_{DC/DC}$) of the transformer (7) making it possible to minimize the criterion of cumulated fuel consumption (*ConsoMth(g/h)*) are determined at each operating point of the engine.

6. Method for managing energy according to one of the preceding claims, **characterized in that** the electrical charge provided by the electric machine (2) operating as a generator is distributed between the traction battery (4) and the on-board battery (6) .

7. Device for managing the energy of a hybrid vehicle comprising a combustion engine (1), one or more electric traction machines (2), at least one high-voltage traction battery (4), a low-voltage on-board battery (6) for the accessories (8) of the vehicle, and a current inverter (3) able to convert the direct currents provided by the traction battery (2) and by the on-board battery (6) into alternating currents for the electric machine (2), **characterized in that** it comprises, between the traction battery (4) and the on-board battery (6), a reversible current transformer (7), the power ($P_{DC/DC}$) of which is determined at each operating point of the engine, as is the value of the traction torque ($T_{SG}$) imposed on the electric machine (2), so as to minimize a criterion of fuel consumption (*ConsoMth(g/h)*) cumulating the consumption of the combustion engine (*ConsoMth(g/h)*), the power ($P_{bat}{}^{HT}$) consumed in the traction battery (4), and the power ($P_{bat}{}^{BT}$) consumed in the on-board battery (6).

8. Management device according to Claim 7, **characterized in that** the value of the traction torque ($T_{SG}$) and of the power ($P_{DC/DC}$) of the transformer are dependent on the state of two equivalence factors *(K, K'),* modulating, respectively, the share of the power ($P_{bat}{}^{HT}$) consumed in the traction battery (4) and of the power ($P_{bat}{}^{BT}$) consumed in the on-board battery (6).

9. Management device according to Claim 8, **characterized in that** the equivalence factors (*K, K'*) are dependent on the respective levels of charge of the traction battery (4) and of the on-board battery (6) of the vehicle.

**Fig. 1**

**Fig. 2**

**Fig. 3**

**Fig. 4**

**Fig. 5**

**Fig. 6**

8

accessoires

PDC/DC

DC/DC

+ — 

14 V

BATT

48 V

4

7

6

ONDULEUR 3

2 ME Mth 1

**Fig. 7**

TSG

8

accessoires

PDC/DC

DC/DC

+ — 

14 V

BATT

48 V

4

7

6

ONDULEUR 3

2 ME Mth 1

**Fig. 8**

**RÉFÉRENCES CITÉES DANS LA DESCRIPTION**

**Documents brevets cités dans la description**

- FR 2988674

- DE 102011087969